# EUROPÄISCHE PATENTANMELDUNG

(11) **EP 0 891 912 A1**
(43) Veröffentlichungstag der Anmeldung: **20.01.1999**
(21) Anmeldenummer: 98111003.4
(22) Anmeldetag: 16.06.1998
(51) Int. Cl.: B62B 3/14

(54) **Stapelbarer Transportwagen**

(30) Priorität: 19.07.1997 DE 29712800 U
(71) Anmelder: WANZL METALLWARENFABRIK GMBH, D-89336 Leipheim (DE)
(72) Erfinder: Schmid, Johann, 87757 Derndorf (DE)

(57) **Zusammenfassung**

Die Erfindung betrifft einen stapelbaren Transportwagen (1), mit einer im hinteren Bereich (4) angeordneten Schiebeeinrichtung (10) und mit einem Fahrgestell (2), das wenigstens eine Abstelleinrichtung (8) für zu transportierende Güter aufweist und mit vier Lenkrollen (6, 7) und mit wenigstens einer Bockrolle (17) ausgestattet ist, wobei sich die wenigstens eine Bockrolle (17) zwischen den im vorderen und im hinteren Bereich (4, 4') angeordneten Lenkrollen (6, 7) befindet und an einem im vorderen Bereich (4) anhebbar gelagerten Traggestell (13) angeordnet ist und daß ferner im vorderen Bereich (4) eine Anhebevorrichtung (16) vorgesehen ist, die beim Ineinanderfahren zweier Transportwagen (1, 1') zum Anheben des Traggestelles (13) des vorausbefindlichen Transportwagens (1') bestimmt ist. Es wird vorgeschlagen, daß am Fahrgestell (2) eine die vorderen Lenkrollen (6) tragende Traverse (11) vorgesehen und daß die Anhebevorrichtung (16) durch die Traverse (11) gebildet ist.

## Beschreibung

Die Erfindung betrifft einen stapelbaren Transportwagen, mit einer im hinteren Bereich angeordneten Schiebeeinrichtung und mit einem Fahrgestell, das wenigstens eine Abstelleinrichtung für zu transportierende Güter aufweist und mit vier Lenkrollen und mit wenigstens einer Bockrolle ausgestattet ist, wobei sich die wenigstens eine Bockrolle zwischen den im vorderen und im hinteren Bereich angeordneten Lenkrollen befindet und an einem im vorderen Bereich anhebbar gelagerten Traggestell angeordnet ist und daß ferner im vorderen Bereich eine Anhebevorrichtung vorgesehen ist, die beim Ineinanderfahren zweier Transportwagen zum Anheben des Traggestelles des vorausbefindlichen Transportwagens bestimmt ist.

Transportwagen dieser Art sind unter anderem in der europäischen Patentschrift 0 352 647 B1 und in den deutschen Gebrauchsmusterschriften 295 16 945 U1 und 295 200 56 U1 näher beschrieben. Als Anhebevorrichtung werden dort ein Bügel oder ein Keilschuh vorgeschlagen. Der Bügel und der Keilschuh müssen als eigenständige Teile angefertigt und anschließend am Transportwagen angebracht werden. Diese Lösung ist als kostenaufwendig zu betrachten.

Die Aufgabe der Erfindung besteht darin, einen Transportwagen der hier vorliegenden Art so weiterzuentwickeln, daß bei der Herstellung der Anhebevorrichtung eine Kostenreduzierung erzielbar ist.

Die Lösung der Aufgabe besteht darin, daß am Fahrgestell eine die vorderen Lenkrollen tragende Traverse vorgesehen ist und das die Anhebevorrichtung durch die Traverse gebildet ist.

Die vorgeschlagene Lösung garantiert eine nicht unerhebliche Kostenersparnis, da die Traverse zwei wichtige Funktionen übernimmt. Sie trägt nicht nur die vorderen Rollen, sondern sie dient auch zum Anheben des Traggestelles eines vorausbefindlichen Transportwagens. Der dazu ausgewählte Bereich der Traverse läßt sich beispielsweise durch eine einfache Kröpfung herstellen. Im Gegensatz zu den im bekannten Stand der Technik vorgeschlagenen Ausführungen ist dies eine äußerst einfache Lösung.

Die Erfindung wird anhand eines Ausführungsbeispieles näher erläutert. Es zeigt
Fig. 1 einen Transportwagen sowie
Fig. 2 zwei ineinandergeschobene Transportwagen.

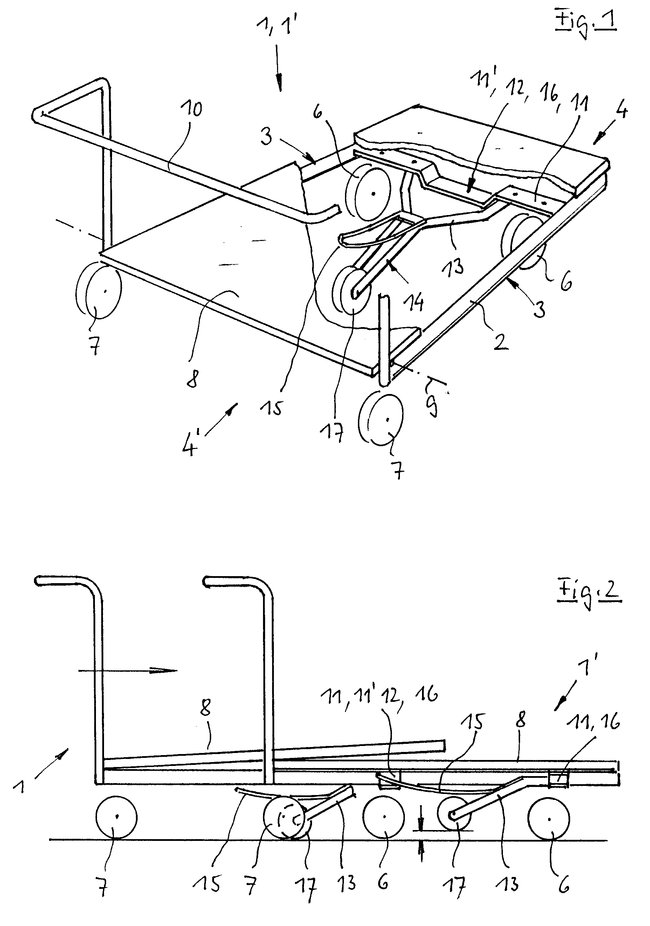

Der in Fig. 1 dargestellte Transportwagen 1 ist in bekannter Weise so gestaltet, daß er mit gleichen Transportwagen 1' platzsparend ineinandergeschoben werden kann, also stapelbar ist. Um die Stapelbarkeit zu erreichen, kennt man mehrere Möglichkeiten. Eine Möglichkeit besteht z.B. darin, das Fahrgestell 2 nach vorne sich verjüngend zu gestalten und hinten offen zu lassen sowie die beispielsweise plattformartige Abstelleinrichtung 8 um eine horizontale Achse 9 schwenkbar anzuordnen, so das die Abstelleinrichtung 9 beim Ineinanderschiebevorgang an der Abstelleinrichtung 9 des vorausbefindlichen Transportwagens 1' aufgleitet und etwas angehoben wird. Das Fahrgestell 2 ist mit vier Lenkrollen 6, 7 ausgestattet und trägt die Abstelleinrichtung 8, etwa eine Plattform oder einen Korb, für zu transportierende Güter. Im hinteren Bereich 4 des Transportwagens 1 ist eine Schliebeeinrichtung 10 vorgesehen. Die beiden vorderen Lenkrollen 6 sind an einer die Längsseiten 3 des Fahrgestelles 2 verbindenden Traverse 11 angeordnet. Die Traverse 11 trägt ein begrenzt nach oben verschwenkbares Traggestell 13, das entsprechend gelenkig oder bewegbar an der Traverse 11 gelagert ist und mit seinem zum hinteren Bereich 4' des Transportwagens 1 gerichteten Abschnitt 14 eine Bockrolle 17 trägt, die demnach zwischen den vorderen und hinteren Lenkrollen 6, 7 angeordnet ist. Das Traggestell 13 unterliegt der Wirkung einer Federkraft, welche die üblicherweise auf der Längsachse des Transportwagens 1 gelegene Bockrolle 17 gegen den Fußboden drückt. Die bevorzugt aus Flachstahl bestehende Traverse 11 weist mittig eine Vertiefung 12 auf, die beim Stapeln zweier Transportwagen 1, 1' dazu dient, einen am Traggestell 13 vorgesehenen und frei nach hinten sich erstreckenden Vorsprung 15 eines vorausbefindlichen Transportwagens 1' zu unterfahren und anzuheben, so daß die Bockrolle 17 des Transportwagens 1' vom Fußboden abgehoben ist. Durch diese Maßnahme läßt sich eine Schlange von gestapelten Transportwagen 1, 1' mühelos bewegen. Je nach Anordnung des Vorsprunges 15 kann der zum Unterfahren eines Traggestelles 13 bestimmte Bereich 11' der Traverse 11 entweder nach unten gekröpft oder als gerades Flachstück gestaltet oder nach oben gekröpft sein. Der Bereich 11' ist zweckmäßigerweise zwischen den vorderen Lenkrollen 6 vorgesehen.

Fig. 2 zeigt zwei ineinanderschobene und somit gestapelte Transportwagen 1, 1'. Die nicht nur als Träger der Lenkrollen 6 sondern auch als Anhebevorrrichtung 16 vorgesehene Traverse 11 hat den Vorsprung 15 des Traggestelles 13 des vorausbefindlichen Transportwagens 1' unterfahren und, da der Vorsprung 15 entsprechend leicht bogenförmig geformt ist, auch angehoben. Während die Bockrolle 17 des hinteren eingeschobenen Transportwagens 1 weiterhin in Kontakt mit dem Fußboden steht, ist die Bockrolle 17 des vorausbefindlichen Transportwagens 1' angehoben. Ein Stapel ineinandergeschobener Transportwagen 1, 1' läßt sich somit leicht entlang von Kurvenbahnen bewegen.

## Patentansprüche

1. Stapelbarer Transportwagen (1), mit einer im hinteren Bereich (4) angeordneten Schiebeeinrichtung (10) und mit einem Fahrgestell (2), das wenigstens eine Abstelleinrichtung (8) für zu transportierende Güter aufweist und mit vier Lenkrollen (6, 7) und mit wenigstens einer Bockrolle (17) ausgestattet ist, wobei sich die wenigstens eine Bockrolle (17) zwischen den im vorderen und im hinteren Bereich (4, 4') angeordneten Lenkrollen (6, 7) befindet und an einem im vorderen Bereich (4) anhebbar gelagerten Traggestell (13) angeordnet ist und das ferner im vorderen Bereich (4) eine Anhebevorrichtung (16) vorgesehen ist, die beim Ineinanderfahren zweier Transportwagen (1, 1') zum Anheben des Traggestelles (13) des vorausbefindlichen Transportwagens (1') bestimmt ist, dadurch **gekennzeichnet,** daß am Fahrgestell (2) eine die vorderen Lenkrollen (6) tragende Traverse (11) vorgesehen ist und daß die Anhebevorrichtung (16) durch die Traverse (11) gebildet ist.

2. Transportwagen nach Anspruch 1, dadurch **gekennzeichnet,** das die Traverse (11) die Längsseiten (3) des Fahrgestelles (2) verbindet.

3. Transportwagen nach Anspruch 1 oder 2, dadurch **gekennzeichnet,** das der zum Unterfahren eines Traggestelles (13) bestimmte Bereich (11') der Traverse (11) entweder nach unten oder nach oben gekröpft ist oder als gerades Flachstück gestaltet ist.

4. Transportwagen nach wenigstens einem der Ansprüche 1 bis 3, dadurch **gekennzeichnet,** daß der Bereich (11') zwischen den vorderen Lenkrollen (6) angeordnet ist.
